# EUROPEAN PATENT SPECIFICATION

(11) **EP 4 300 069 B1**
(45) Date of publication and mention of the grant of the patent: **13.11.2024**
(21) Application number: 23180904.7
(22) Date of filing: 22.06.2023
(51) Int. Cl.: G01N 1/08, B66F 11/04, G01N 1/12, G01N 1/10

(54) **SAMPLING DEVICE, IN PARTICULAR FOR BULK MATERIALS**
PROBENAHMEVORRICHTUNG, INSBESONDERE FÜR SCHÜTTGUT
DISPOSITIF DE PRÉLÈVEMENT D'ÉCHANTILLONS, EN PARTICULIER POUR DES PRODUITS EN VRAC

(30) Priority: 27.06.2022 PL 44156322
(43) Date of publication of application: 03.01.2024
(73) Proprietor: CEREUS WENA ADAM I GRAZYNA WITKOWSCY SP. J., 87-100 Torun (PL)
(72) Inventor: Mianowski, Krzysztof, 03-984 Warszawa (PL); Pekal, Marcin, 01-946 Warszawa (PL); Wojtyra, Marek, 01-494 Warszawa (PL); Barczak, Tomasz, 03-721 Warszawa (PL); Kaminski, Grzegorz, 05-240 Tluszcz (PL); Surowiec, Marek, 05-840 Brwinow (PL); Witkowski, Adam, 87-100 Torun (PL); Witkowski, Marcin, 87-100 Torun (PL)
(74) Representative: Wroblewski, Marcin Jan

(56) References cited:
- FR-A1- 2 535 296
- JP-A- S4 872 838
- US-A- 3 789 671
- US-A- 4 037 476

## Description

The subject of the invention is a sampling device, in particular for bulk materials especially for bulk materials of agricultural origin. The device is used, among others, in agriculture and in the grain and feed industry in general, especially for sampling in order to control their quality, or for the purposes of preparing documentation required for the correct assessment of deliveries.

Sampling devices are known in the state of the art, allowing to check the composition of the bulk material in order to compare it with the applicable standards or agreed contractual and delivery conditions. Bulk materials consist of particles of different densities and sizes, and it is impossible to perceive bulk materials present in a batch as a set of separate objects. To evaluate these materials, sampling devices are used to take a sample from the batch of material that is intended to be representative of the entire batch being analysed. In the activity related to the trading of bulk materials of agricultural origin, bulk material is transported in large quantities in tanks and containers by means of mass transport, such as trucks, railway wagons or barges. In such activity, it is necessary to comply with the established standards of quality control of agricultural products, because the quality of the product affects its intended use and price. Samples to determine the quality of the transported bulk material are collected using sampling devices that often operate in an automated manner.

Such devices are usually equipped with a sampling probe. Using the latter, spot quality control of grain is carried out by placing the probe in the inner layer of the controlled material. The devices usually also contain limit protections for control and emergency shutdown of the system in the event of factors disturbing the correct operation of the device. Typically, mechanical bumpers or electrical sensors connected to the control system are used as such protection. Such protections are used to turn off the device in the event of possible damage to the probe, usually caused by its hitting the bottom of the grain tank.

The sampling device is known, for example, from the description of utility model DE 202014009827 U1. It is equipped with a column mounting a rotary boom, at the end of which a movable driving arm connected to a sampling probe is mounted. Both the boom and the driving arm are driven so that it is possible to rotate the boom as well as rotate and raise and lower the driving arm with the probe. Furthermore, it is possible to move the boom by moving it horizontally using the drive. Individual movements of the device allow for adjusting the position of the probe to the location of the container from which the sample is to be taken. The drives used in the device, including precision rotary drives with external gears and bevel gears with a chain drive, enable controlled automation of sampling. Furthermore, the device is equipped with a securing element that prevents damage to the system in the event of incorrect guidance of the probe. The securing element allows for securing the movement of the probe encountering an obstacle. In the event of a certain and undesirable type of movement, the securing element is destroyed and the entire device remains undamaged.

The patent document FR 2582630 B1 discloses a sampling device, in particular designed for taking samples of granular materials. The device is equipped with a column on which at least one boom arm is mounted. The arm has been mounted on the column in a way that ensures free rotation around the column axis, while the rotation is carried out by combining the operation of two separate electric motors. At the end of the boom arm, a probe is mounted in an articulated manner, used for sampling. Furthermore, the device is equipped with protection against damage in the form of a movement limiter, which stops the movement of the probe when the tip of the probe meets an obstacle. The device is equipped with a sensor and a limiter, controlling the rotation of the boom arm with the probe up and down, along the axis parallel to the column. Said sensor may be a pressure or electric type sensor, for example a contactor. The sensor is located on an element integral with the boom arm mount. In turn, the limiter is integrated into the end of the probe to allow the movement of the probe to be stopped when its end encounters an obstacle. Said sensors are connected to control means for stopping the motor responsible for the extent of the arm's deflection when the free end of the probe encounters resistance greater than the pre-tension imposed on the resilient means or a resistance higher than the values intended for proper operation of the device.

In the document US 3789671A discloses a device for removing a sample of particulate material from predetermined locations in the mass of said material.

Document JP1973072838A discloses mechanism of the overload of a crane or the like and an over alarm device. When a hook exceeds a predetermined ascent height in a crane operation, and a load applied to a suspended article is reduced.

FR 2535296A1 relates to a device for the pneumatic sampling of granular materials comprising an articulated gantry which supports, substantially vertically, a probe provided with loading openings which can be closed and which are distributed over the length of the said probe and which connect with a gravity-loading pipe, for the material to be sampled, while an intake pipe of the latter is connected with the lower section of the said loading pipe. This device is noteworthy in that the lower ends of the loading and intake pipes are connected with an air inlet pipe which emerges into the open air in the vicinity of the upper part of the probe. This device is particularly intended for taking samples of cereals.

A old type of grain sampling probe in known from document US4037476A. In the document the grain sampling probe, comprised of a base, an elongated support pole, a support arm pivotally connected at one end to the top portion of the support pole, an elongated hollow probe pivotally connected to the other end of said support arm, a power output means and a mechanical drive means associated with the power output means to move the probe at a uniform rate of speed downwardly and upwardly so that the probe will obtain a truly representative core sample of the grain or other material within a grain hauling vehicle. The object of the invention is to solve the technical problem of the susceptibility of sampling devices to damages, and in particular to damages of the material sampling probe. Known methods and devices are not sufficient to ensure effective protection of this type of devices against partial damage or complete destruction. During the operation of such devices, in particular during the movement of the sampling probe, the structural elements may be affected by forces caused by the appearance of an unforeseen obstacle when lowering the probe and placing it in the material being collected. Such forces can also occur when the probe is lifted up, i.e. when the probe is pulled out of the material being collected and returned to its starting position. In such cases, when the boom arm with the probe moves, the probe, the boom arm or other elements of the device may hit and catch on an obstacle, or even get stuck in an unidentified gap in an external obstacle. In such a situation, during movement, the boom arm drive may cause mechanical damage to the boom arm, probe or other components important for the operation of the system. The invention is therefore to ensure protection of the sampling device against damage, regardless of the direction of the forces acting on the structural elements of the device.

The subject of the invention is a sampling device, , in particular for bulk materials. The device comprises a base to which a boom arm is movably connected, having a movably mounted probe at its free end, wherein the device is equipped with a boom arm drive and at least one drive shutdown sensor, wherein the base there is movably connected a drive bracket having attached a drive, which is connected to the boom arm, and wherein the drive bracket is supported by at least one deformable element fixed on the base, and the drive shutdown sensor reads at least the extreme positions of the drive bracket.

The essence of the invention is that the deformable element is a mechanical spring.

It is equally good when the drive bracket is equipped with an intermediate element adapted to cooperate with the shutdown sensor.

It is also desirable that the base has an additional support element located above the drive bracket.

It is appropriate that the drive bracket is supported by at least a pair of mechanical springs, the first of which is seated on the base mounting plate, and the second one is seated on an additional support element.

Preferably, the deformable elements supporting the drive bracket are pre-tensioned.

It is reasonable when the drive is pivotably mounted on the drive bracket.

It is also good if the shutdown sensor is a non-contact type shutdown sensor.

The main advantage of the invention is the protection of the device against its damage, regardless of the direction of the forces acting on the structural elements of the device. The sampling device is protected against the effects of excessive external load, it ensures automatic shutdown of the device in failure conditions, in particular preventing damage to the sampling probe. Mounting the drive on a drive bracket movably connected to the base and supporting this drive bracket with at least one deformable element, namely by at least one mechanical spring, results in the fact that if during operation the boom arm comes into contact with an external obstacle, then the drive bracket will start to change its position and the mechanical spring will bend in proportion to the driving force developed by the drive. The change in the position of the drive bracket occurs regardless of the direction of movement of the boom arm, i.e. regardless of whether the probe is driven into the bulk material or withdrawn from the working area.

This action softens the course of forces acting on the device and results in less wear of the device's components. Furthermore, the position of the drive bracket is controlled by a shutdown sensor. The measuring system, in the form of a shutdown sensor, is also an important element of the device. Exceeding a predetermined, assumed level of forces, which translates into a change in the position of the drive bracket read by the shutdown sensor or shutdown sensors, results in shutting down the drive and stopping the operation of the device. Threshold values of forces causing the shutdown sensor to generate a signal to shut down the drive can be set independently, i.e. at different required levels for the state of driving the probe into the tested material and for the state of withdrawing it from the working area. Consequently, it is possible to set different force thresholds causing the shutdown of the device for raising and lowering the arm. This is possible, for example, by selecting appropriate deformable elements or by properly positioning the shutdown sensor. On the other hand, the pre-tension of the deformable elements avoids occurring backlash of the deformable elements, especially the resilient elements, during operation of the device.

The construction used protects not only the sampling device itself against damage, but also eliminates damage to the infrastructure or external parts among which the device operates.

Furthermore, the device according to the invention is universal, because it enables the collection of various samples of bulk materials with different grain diameters and different weights, and the base itself can be mounted to various types of supporting structures, both motionless and movable. Furthermore, the device has a simple design, which by minimizing structurally complex elements of the device mechanism increases the reliability of its operation and leads to the optimization of its production process. A particularly good solution is to use a linear motor as a drive.

Equipping the drive bracket with an intermediate element adapted to cooperate with the shutdown sensor increases the sensitivity and certainty of reading the position of the drive bracket by the shutdown sensor, and thus ensures effective generation of a signal about a dangerous, temporary state of the device, which consequently leads to the protection of the device by stopping its operation. Using the intermediate element, the drive bracket can be easily adapted to cooperate with the selected type of shutdown sensor.

Furthermore, the shutdown sensor used in the device can be a non-contact type shutdown sensor, reducing the susceptibility to damage to the shutdown sensor during operation of the device, in particular in demanding conditions causing mechanical vibrations of the device.

The subject of the invention is shown in the embodiments and in the drawing, where:

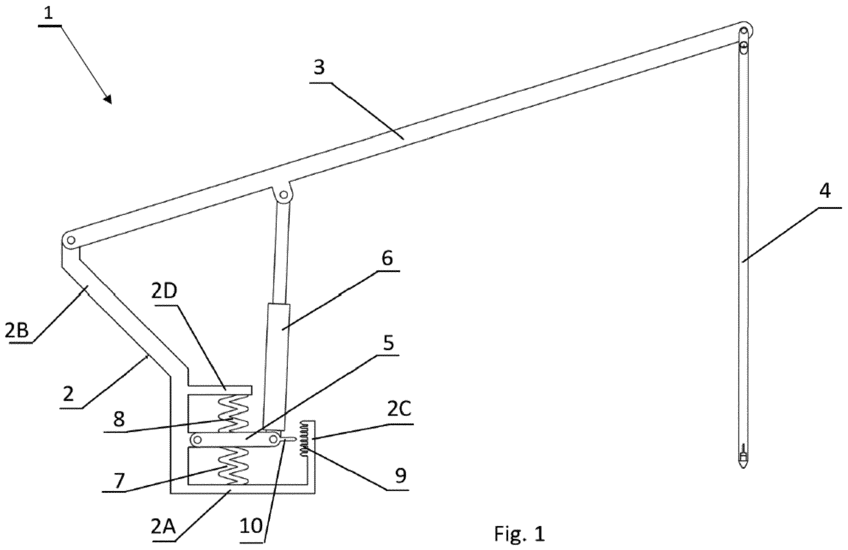

Fig. 1 shows a side view of the sampling device when the device is turned off or working properly;
Fig. 2 is a side view of the sampling device in the loaded state caused by the pressing of the probe against a rigid obstacle in its field of operation;
Fig. 3 is a side view of the sampling device in the loaded state caused by the arm engaging an external obstacle during upward movement;
Fig. 4 shows a side view of the device in the second embodiment.

The sampling device 1, in particular for bulk materials, comprises a base 2 in which a mounting plate 2A, a first shaped side wall 2B, and a second side wall 2C can be distinguished. The base 2 is the basic part to which the other parts of the device 1 are connected. The base 2 is adapted to be connected to known support structures used in bulk material sampling devices, such as columns.

The mounting plate 2A is adapted to be mounted on a mechanical system that allows the mounting plate 2A to be maneuvered in such a way that it is possible to move the sampling device 1 together with the mounting plate 2A along the horizontal axis or to rotate the sampling device 1 together with the mounting plate 2A around the vertical axis. The mounting plate 2A may also be connected to any immovable support structure.

The end of the first side wall 2B is pivotally connected to the boom arm 3, the end of which has a pivotally mounted probe 4. The probe mount 4 is a non-driven pivot allowing it to achieve a vertical position due to the force of gravity. The pivotal connection between the first side wall 2B and the boom arm 3 provides the possibility of free angular tilting of the boom arm 3, and consequently moving the probe 4 up or down during operation of the device 1.

On the first side wall 2B of the base 2, on its inner side, the drive bracket 5 is swingably mounted. The swingable connection is realized by pivotal connection of one end of the drive bracket 5 to the side wall 2B. The other end of the drive bracket 5 is not connected to the base 2. Furthermore, the inner part of the first side wall 2B has a rigid additional support element 2D located above the drive bracket 5. In an embodiment, the additional support element 2D is mounted directly to the first side wall 2B, but there are possible embodiments in which the support element 2D will be connected to other parts of the base 2. The additional support element 2D is in the form of a bracket mounted to the first side wall 2B which has a socket holding the upper end of the deformable element 8, as will be discussed later.

On the drive bracket 5, the drive 6 in the form of an electric linear actuator was pivotally mounted. In other embodiments, the drive may have other forms, including other types of actuators, or a motor for moving the boom arm 3 up or down. The actuator cylinder is connected to the drive bracket 5, and - the actuator piston rod is connected to the boom arm 3. The linear movement of the actuator and extension of the piston rod causes the arm to rise, and thus the probe 4 moves upwards. Inserting the piston rod into the cylinder causes the probe 4 to move downwards. Typically, by the downward movement of the probe 4, the probe 4 is inserted into the test material, and by the upward movement of the probe 4, the probe 4 is withdrawn from the test material.

In an embodiment of the invention, the drive bracket 5 is supported by a pair of deformable elements 7, 8 in the form of pre-tensioned mechanical springs. From below, the drive bracket 5 is supported by a first deformable element 7, which is seated on a mounting plate 2A. From above, the drive bracket 5 is supported by a second deformable element 8, which is mounted on an additional support element 2D having a socket holding the upper end of this deformable element 8. Such location of deformable elements 7, 8 ensures stability of a drive 6 assembly on a swingable drive bracket 5. Both mechanical springs - deformable elements 7, 8 are seated on a common axial rod passing through a hole in the drive bracket 5. A nut is screwed onto this rod to set the pre-tension of both mechanical springs. The optimal pre-tension value is equal to half the maximum allowable force for a given spring.

In other embodiments the drive bracket 5 may be supported by a single deformable element, including a properly fixed mechanical spring.

On the inner part of the second side wall 2C, at the height of the drive bracket 5, a non-contact shutdown sensor 9 is mounted that continuously reads the position of the drive bracket 5. In an embodiment, the shutdown sensor 9 has a metal detection area relative to which the drive bracket 5 moves. In other embodiments, a pointer consisting of a indicator moving against a scale may be used as this type of shutdown sensor. To enable accurate operation, the drive bracket 5 is equipped with an intermediate element 10 adapted to cooperate with the shutdown sensor 9. The intermediate element 10, cooperating with the shutdown sensor 9, generates in the shutdown sensor 9 an appropriate signal for a drive control system (not shown in the figure), transmitting information about the position of the drive bracket 5. The intermediate element 10 generates a signal in the shutdown sensor 9 representing the current position of the drive bracket 5 supported on both sides by mechanical springs and loaded with the force of the actuator.

During the correct operation of the device 1, the drive bracket 5 is in the position corresponding to the middle part of the detection area of the shutdown sensor 9.

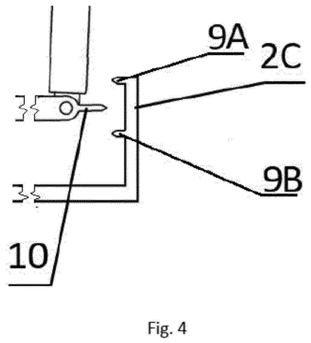

In the second embodiment (Fig. 4), two shutdown sensors 9A and 9B are mounted on the inner part of the second side wall 2C. The mounting places of the shutdown sensors correspond to the extreme positions of the drive bracket 5 with the intermediate element 10. When the drive bracket enters the operating range of one of the shutdown sensors 9A or 9B, a signal is generated to shut down the drive 6.

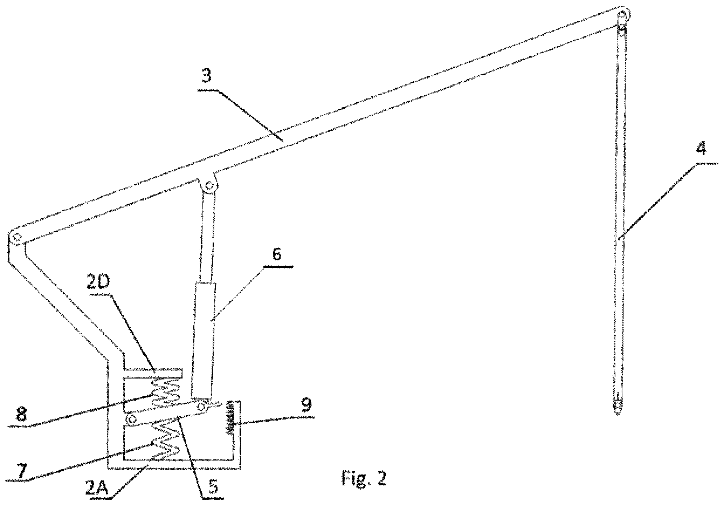

If, during the operation of the sampling device 1 (Fig. 2), during the downward movement of the probe 4 - while driving the probe 4 into the bulk material, the probe 4 encounters a rigid obstacle, the bracket drive will deviate from the initial position. Such an obstacle may be a foreign body in the material being tested, or the bottom of a container or trailer used to transport bulk materials, including cereals. As a result of the force overloading the probe 4, the arrangement of deformable elements 7, 8 will deflect and the drive bracket 5 will tilt and its unmounted end will approach the additional support element 2D. As a consequence of the impact of the intermediate element 10 on the shutdown sensor 9, a threshold signal will be generated about the overload of the probe 4, causing the reaction of the drive control system 6 and its shutdown or change of its direction of move..

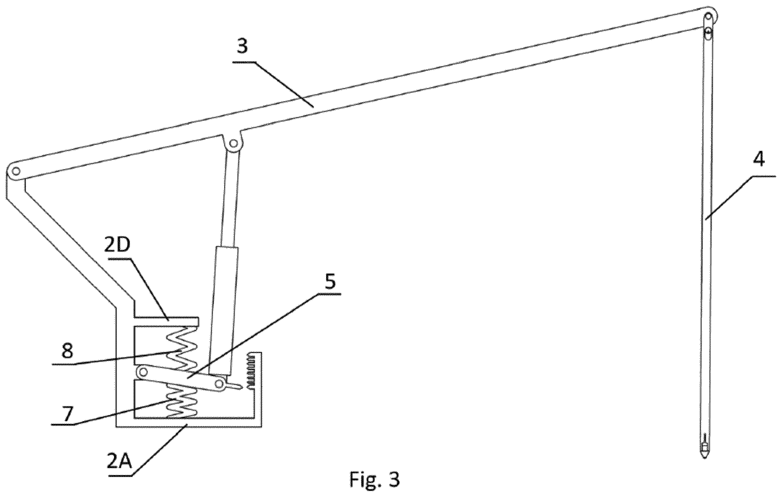

The reverse will occur as the probe 4 moves up and out of the working area. If the probe 4 gets stuck, for example, in an unidentified gap, or the boom arm 3 catches on an external obstacle (Fig. 3), then as a result of a force overloading the probe 4, the system of deformable elements 7, 8 will deflect. The drive bracket 5 will tilt and its unmounted end will approach the mounting base 2A. As a consequence of the impact of the intermediate element 10 on the shutdown sensor 9, a threshold signal will be generated about the overload on the probe 4, causing the reaction of the drive control system 6 and its shutdown or change of its direction of move.

## Claims

1. Device for sampling, in particular for bulk materials, comprising a base to which a boom arm is movably connected, having a movably mounted probe at its free end, wherein the device is equipped with a boom arm drive and at least one drive shutdown sensor, wherein the base (2) is movably connected to a drive bracket (5) having attached a drive (6), which is connected to the boom arm (3), and wherein the bracket drive (5) is supported by at least one deformable element (7, 8) fixed on the base (2), the drive shutdown sensor (9) reads at least the extreme positions of the drive bracket (5) and **characterized in that** the deformable element (7, 8) is a mechanical spring.

2. The device according to claim 1, wherein the drive bracket (5) is swingably connected to the base (2).

3. The device according to any one of claims from 1 to 2, wherein the drive bracket (5) is equipped with an intermediate element (10) adapted to cooperate with the shutdown sensor (9).

4. The device according to any one of claims from 1 to 3, wherein the base (2) has an additional support element (2D) located above the drive bracket (5).

5. The device according to claim 4, wherein the drive bracket (5) is supported by at least a pair of mechanical springs (7, 8), the first of which is seated on the mounting plate (2A) of the base (2), and the second is seated on the additional support element (2D).

6. The device according to any one of claims from 1 to 5, , wherein the mechanical springs (7, 8) supporting the bracket are pre-tensioned.

7. The device according to any one of claims from 1 to 6, wherein the drive (6) is pivotally mounted on the drive bracket (5).

8. The device according to any one of claims from 1 to 7, wherein the shutdown sensor (9) is a non-contact type shutdown sensor.

9. The device according to any one of claims from 1 to 8, wherein the drive (6) is a linear actuator.

## Patentansprüche

1. Probenahmegerät, insbesondere für Schüttgüter, mit einem Grundkörper, an dem ein Auslegerarm beweglich angeschlossen ist, der an seinem freien Ende eine beweglich gelagerte Sonde aufweist, wobei das Gerät mit einem Auslegerarmantrieb und mindestens einem Antriebsabschaltsensor ausgestattet ist, wobei der Basis (2) beweglich mit einer Antriebshalterung (5) verbunden ist, an dem ein Antrieb (6) angebracht ist, der mit dem Auslegerarm (3) verbunden ist und wobei der Antriebshalterung (5) von mindestens einem an der Basis (2) befestigten verformbaren Element (7, 8) getragen wird, der Antriebsabschaltsensor (9) mindestens die Extrempositionen der Antriebshalterung (5) abliest und **dadurch gekennzeichnet, dass** das verformbare Element (7, 8) eine mechanische Feder ist.

2. Das Gerät nach Anspruch 1, wobei die Antriebshalterung (5) schwenkbar mit der Basis (2) verbunden ist.

3. Das Gerät nach einem der Ansprüche 1 bis 2, wobei die Antriebshalterung (5) mit einem Zwischenelement (10) ausgestattet ist, das so beschaffen ist, dass es mit dem Abschaltsensor (9) zusammenwirkt.

4. Das Gerät nach einem der Ansprüche 1 bis 3, wobei die Basis (2) ein zusätzliches Stützelement (2D) aufweist, das über der Antriebshalterung (5) angeordnet ist.

5. Das Gerät nach Anspruch 4, wobei die Antriebshalterung (5) von mindestens einem Paar mechanischer Federn (7, 8) getragen wird, von denen die erste auf der Montageplatte (2A) der Basis (2) sitzt und die zweite auf dem zusätzlichen Stützelement (2D) sitzt.

6. Das Gerät nach einem der Ansprüche 1 bis 5, wobei die mechanischen Federn (7, 8), die die Halterung tragen, vorgespannt sind.

7. Das Gerät nach einem der Ansprüche 1 bis 6, wobei der Antrieb (6) schwenkbar an der Antriebshalterung (5) angebracht ist.

8. Das Gerät nach einem der Ansprüche 1 bis 7, wobei der Abschaltsensor (9) ein berührungsloser Abschaltsensor ist.

9. Das Gerät nach einem der Ansprüche 1 bis 8, wobei der Antrieb (6) ein Linearantrieb ist.

## Revendications

1. Dispositif d'échantillonnage, en particulier pour les matériaux en vrac, comprenant une base à laquelle un bras de flèche est relié de manière mobile, ayant une sonde montée de manière mobile à son extrémité libre, dans lequel le dispositif est équipé d'un entraînement du bras de flèche et d'au moins un capteur d'arrêt de l'entraînement, dans lequel la base (2) est reliée de manière mobile à un support d'entraînement (5) auquel est fixé un entraînement (6), qui est relié au bras de flèche (3), et dans lequel le support d'entraînement (5) est soutenu par au moins un élément déformable (7, 8) fixé sur la base (2), le capteur d'arrêt (9) de l'entraînement lit au moins les positions extrêmes du support d'entraînement (5), et **caractérisé en ce que** l'élément déformable (7, 8) est un ressort mécanique.

2. Le dispositif selon la revendication 1, dans lequel le support d'entraînement (5) est relié de manière pivotante à la base (2).

3. Le dispositif selon l'une des revendications 1 à 2, dans lequel le support d'entraînement (5) est équipé d'un élément intermédiaire (10) adapté pour coopérer avec le capteur d'arrêt (9).

4. Le dispositif selon l'une des revendications 1 à 3, dans lequel la base (2) a un élément de support supplémentaire (2D) situé au-dessus du support d'entraînement (5).

5. Le dispositif selon la revendication 4, dans lequel le support d'entraînement (5) est soutenu par au moins une paire de ressorts mécaniques (7,8), dont le premier est fixé sur la plaque de montage (2A) de la base (2), et le second est fixé sur l'élément de support supplémentaire (2D).

6. Le dispositif selon l'une des revendications 1 à 5, dans lequel les ressorts mécaniques (7, 8) soutenant le support sont pré-tendus.

7. Le dispositif selon l'une des revendications 1 à 6, dans lequel l'entraînement (6) est monté de manière pivotante sur le support d'entraînement (5).

8. Le dispositif selon l'une des revendications 1 à 7, dans lequel le capteur d'arrêt (9) est un capteur d'arrêt de type sans contact.

9. Le dispositif selon l'une des revendications 1 à 8, dans lequel l'entraînement (6) est un actionneur linéaire.
